# EUROPEAN PATENT SPECIFICATION

(11) **EP 1 020 683 B1**
(45) Date of publication and mention of the grant of the patent: **03.05.2006**
(21) Application number: 98944292.6
(22) Date of filing: 29.09.1998
(51) Int. Cl.: F23G 7/00

(54) **INFLATOR PROCESSING APPARATUS AND METHOD OF JUDGING CHARGE OF INFLATOR**
VERARBEITUNGSGERÄT FÜR AUFBLASVORRICHTUNGEN UND VERFAHREN ZUR BEURTEILUNG DER AUFBLASVORRICHTUNGSLADUNG
APPAREIL DE TRAITEMENT DE GONFLEUR ET PROCEDE D'EVALUATION DE LA CHARGE DU GONFLEUR

(30) Priority: 29.09.1997 JP 26457497
(43) Date of publication of application: 19.07.2000
(60) Divisional application: 05019617.9
(73) Proprietor: DAICEL CHEMICAL INDUSTRIES, LTD., Sakai-shi, Osaka 590-8501 (JP)
(72) Inventor: FUKABORI, Mitsuhiko, Hyogo 671-1611 (JP); NAKABAYASHI, Nobuo, Minamikawachi-gun Osaka 585-0044 (JP); SAKAI, Kanshi, Toyota-shi Aichi 471-8571 (JP); SUZUKI, Yasumitsu, Toyota-shi Aichi 471-8571 (JP); YOSHITAKE, Norio Nippon Steel Corporation, Fukuoka 804-0002 (JP); FUJIOKA, Masato Kyuchiku Kogyo K.K., Kitakyushu-shi Fukuoka 805-8533 (JP)
(74) Representative: W.P. Thompson & Co.
(86) International application number: PCT/JP1998/004366
(87) International publication number: WO 1999/016641

(56) References cited:
- EP-A- 0 677 336
- WO-A-96/14173
- WO-A-97/21058
- JP-A- 63 259 315
- JP-A- 63 282 416
- PATENT ABSTRACTS OF JAPAN vol. 008, no. 026 (M-273), 3 February 1984 (1984-02-03) & JP 58 184420 A (HITACHI ZOSEN KK), 27 October 1983 (1983-10-27)

## Description

### Technical Field:

The present invention relates to a method of judging the timing of charge of inflators into an inflator processing apparatus adapted to process a gas generating chemical-containing inflator for an air bag of an automobile by heating the inflator to a temperature not lower than an operating temperature of the chemical and recover a metal case therefor,

### Brief Description of the Drawings:

Fig. 1 is a longitudinal section illustrating one an inflator processing apparatus for use in a method in accordance with this invention.
Fig. 2 is a flow chart illustrating a method of judging the timing of charge of inflators.
Fig. 3 is a longitudinal section illustrating an example of inflator processing by a conventional waste incinerator.

In the figures;
1: inflators;
2: processing furnace;
3: incinerator;
4, 4a and 4b: furnace wall;
5: sealing valve;
6: charge pusher;
7: charger;
8a, 8b and 8c: partition wall;
9: processing gas supply port;
10: residue discharge port;
11: exhaust tube;
12: burner;
13: air supplier for dilution;
14: waste incinerator;
15: inflator charge port;
16: pressure sensor;
17: peak counter;
20: hopper.

### Background of the Invention:

Installation of air bags has been already made compulsory by laws in U.S. and other countries as safety systems for mitigating impacts on human bodies in case of collisions of automobiles. In Japan, too, there is a high possibility that the installation is made compulsory by laws in the near future.

An inflator is an inflating device for such an air bag. A chemical contained in the inflator is operated by impact occurring at the time of a collision (for example, 2NaN₃ + CuO → Na₂O + Cu + 3N₂), thereby generating an N₂ gas by which the air bag is instantly inflated to protect a passenger(s).

Also, in Japan, new cars equipped with air bags have been recently increasing in number. Since, when those cars equipped with air bags are disposed, a large number of chemical-containing inflators will be generated, it is necessary to operate and process the chemical safely and recover a metal case of the inflator from the standpoints of safety and effective utilization of resources.

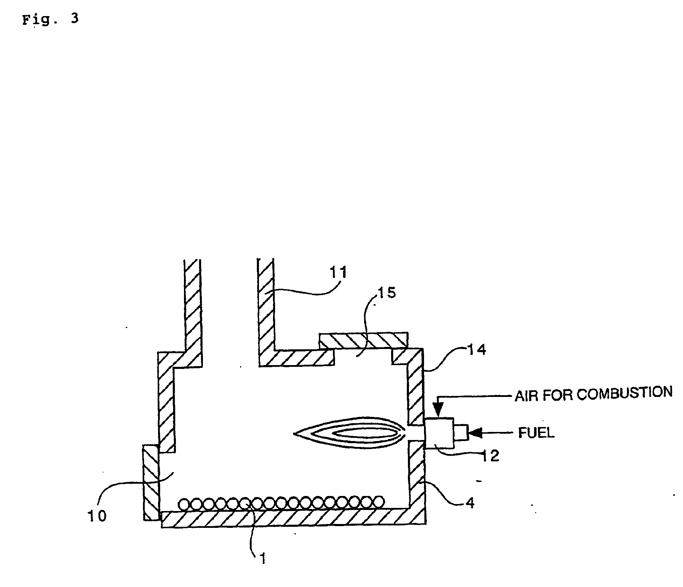

However, since, in recent years, those air bags have started to be installed in automobiles, established processing techniques are not available, and it is the present state that experiments are being conducted to search for a processing method, for example, using a conventional waste incinerator 14, as shown in Fig. 3. This waste incinerator 14 includes a furnace shell formed by a furnace wall 4, an inflator charge port 15 for charging inflators 1 into the incinerator 14, a burner 12 for heating and processing the charged inflators 1, a residue discharge port 10 for discharging the processed inflators 1, and an exhaust tube 11 for evacuating the interior of the incinerator.

Generally, an inflator for an air bag contains a gas generating chemical in a metal case made of stainless steel or aluminum. While a size of the inflator is slightly different between one for a driver's and one for a passenger's side, the rough size of metal cases is approximately from φ50 × H200 mm to φ100 × H50 mm. The operating temperature of the chemical is normally approximately from 300 to 600°C, though it varies depending upon the presence or absence of an igniter.

However, in case where the chemical-containing inflator is processed in the conventional waste incinerator, there were the following problems:
(1) Operation of the chemical splashes the inflator or its fragments, thereby damaging a furnace wall refractory of the waste incinerator or the burner.
(2) Since the burner is directly provided on the waste incinerator, the temperature distribution inside the furnace is made non-uniform by influence of a high-temperature flame, whereby the heating time of the inflator, i.e., the operating time of the chemical, becomes irregular; during a charge work of the inflator, an operation of the chemical occurs; and, in addition, the metal case of the inflator is melted.

EP0677336-A discloses a method of disposing of an inflator from an airbag system loaded in a scrapped automobile, the method including the steps of heating the inflator to produce combustion gasses and washing the inflator after production of the gasses to remove contaminants; the heating being carried out in a heating furnace which is operated in either a batch or continuous mode.

### Disclosure of the Invention

The present invention therefore provides a method of judging the timing of charge of inflators into an inflator processing apparatus adapted to process a gas generating chemical-containing inflator for an air bag of an automobile by heating the inflator to a temperature not lower than an operating temperature of the chemical, characterised in that the timing of charge of the inflators is judged by comparing the number of charged inflators with the number of peak points of furnace pressure during an operation of the chemical.

In the method of judging charge of inflators in accordance with this invention, since the timing of charge of the inflator is judged by comparing the number of charged inflators with the number of peaks of furnace pressure during the operation of the chemical, during charge of the inflator, ejection of the gas generated in the furnace due to the operation of the inflator is prevented.

### Form to Carry Out the Invention

An apparatus for use in the present invention is hereinafter described with reference to the drawings.

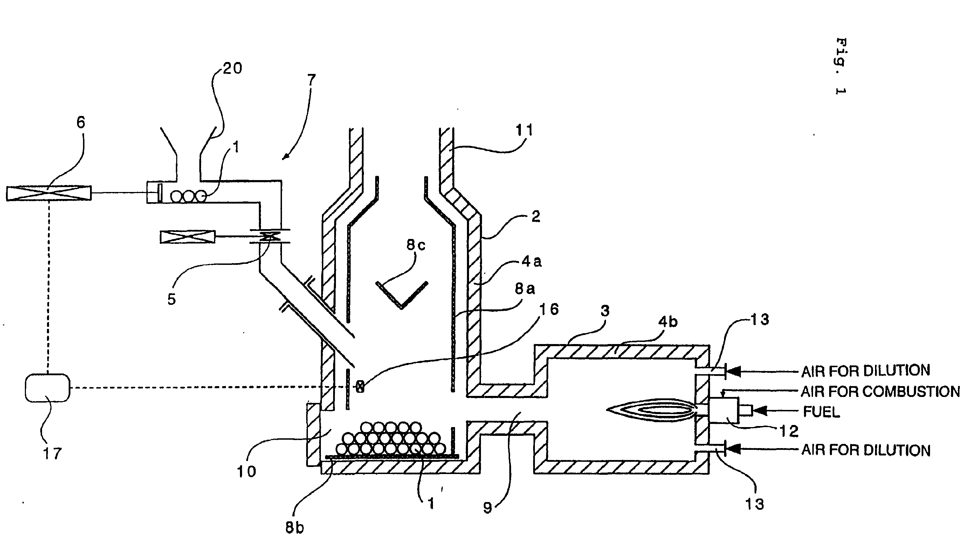

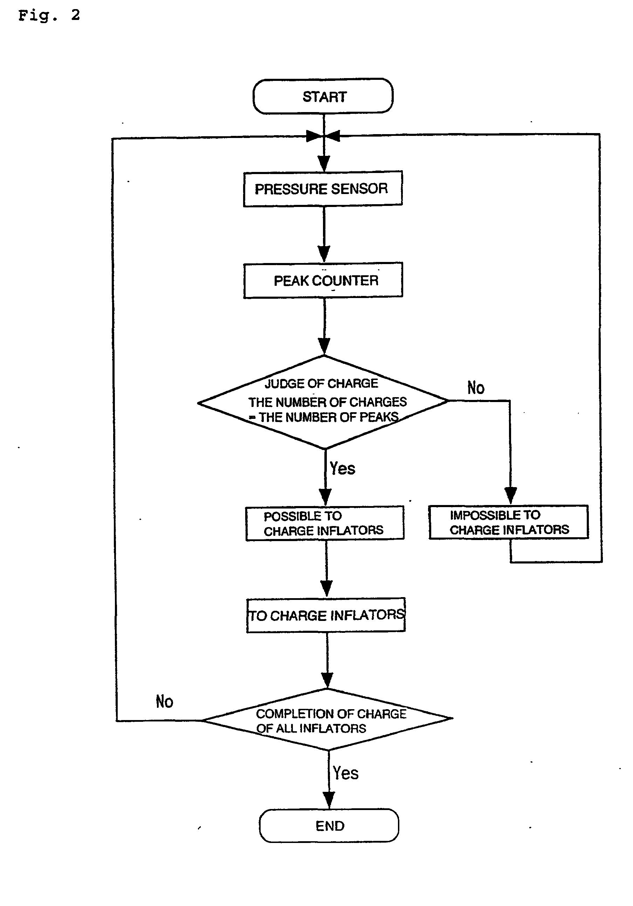

Fig. 1 is a longitudinal section of an inflator processing apparatus suitable for use in the method of the invention and Figure 2 is a conceptual diagram illustrating a method of judging the timing of charge of the inflator.

As shown in Fig. 1, the inflator processing apparatus is constituted by a processing furnace 2 for processing inflators 1 and an incinerator 3 connected together, and shells of the processing furnace 2 and of the incinerator 3 are formed by furnace walls 4a and 4b, respectively.

Since the furnace walls 4a and 4b are required to have refractoriness, heat insulation, and hermeticity, the outer shells of the furnace walls 4a and 4b are normally made of steel skin, and inner surfaces of the steel skin are lined with a refractory material such as castable ceramic fibers.

A charger 7 constituted by a sealing valve 5 and a charge pusher 6 is provided in a side portion of the wall 4a of the processing furnace 2, and the inflators 1 are charged intermittently into the processing furnace 2 by the charger 7.

From the standpoint of preventing the ejection of the gas generated in the furnace, it is desired to operate the sealing valve 5 and the charge pusher 6 for a short period of time, and a driving apparatus to be used is generally in a pneumatic driving mode.

Metal partition walls 8a, 8b, and 8c are provided between the inner surface of the inflator 1 charged in the processing furnace 2 and the furnace wall 4a of the processing furnace 2. Since the metal partition walls 8a, 8b, and 8c are required to have heat resistance and heat strength, a heat-resisting steel such as SUS310S is usually used.

Further, a processing gas supply port 9 for heating the inflators and a residue discharge port 10 for the inflators 1 are provided in a lower portion of the processing furnace 2 as well as an exhaust tube 11 for the processing gas after heating the inflators is provided in an upper portion thereof.

On the other hand, a burner 12 is aligned in one terminal side of the incinerator 3, and fuel and air for combustion are supplied as well as air for dilution is supplied into the incinerator 3 from an air supplier for dilution 13 provided in an outer portion of the burner 12.

The incinerator 3 and a furnace bottom portion of the processing furnace 2 constructed in this way are connected through the processing gas supply port 9, and processing gas for heating the inflators 1 is supplied into the processing furnace 2 from the incinerator 3.

Next, the operation and function of the inflator processing apparatus in a method of judging the timing of charge of the inflators will be described.

Fuel and air for combustion are supplied into the burner 12 of the incinerator 3 to generate a high-temperature flame, and the temperature of this high-temperature flame is adjusted to a processing gas temperature adapted for the processing temperature of the inflators 1 and slightly higher than the operating temperature of the chemical by the air for dilution from the air supplier for dilution 13, and then blown into the furnace bottom portion of the processing furnace 2 from the processing gas supply port 9.

On the other hand, after opening the sealing valve 5 of the charger 7, the charge pusher 6 is operated to charge the inflators 1 into the processing furnace 2, and immediately thereafter, the sealing valve 5 is closed.

Since the inflators 1 charged in the processing furnace 2 are heated uniformly and softly by a low-temperature processing gas supplied through the processing gas supply port 9, the heating time of the inflators 1 is substantially uniform, and, as a result, the operating time of the chemical is rendered substantially uniform. Also, since the temperature of the processing gas is low, the melting of the metal case of the inflator 1 and high-temperature oxidation of the metal partition walls 8a, 8b, and 8c of the processing furnace 2 are prevented.

Further, since the metal partition walls 8a, 8b, and 8c are provided so as to cover the inner surface of the furnace wall 4a of the processing furnace 2, the inflators 1 and their fragments splashed by the operation of the chemical collide directly against the partition walls 8a, 8b, and 8c and drop on the furnace floor so that the furnace wall 4a is not damaged. Accordingly, a soft furnace material such as ceramic fibers having good heat responsibility can be used as the furnace wall 4a, and it is easy to start up the furnace.

The processing gas after the inflators 1 have been heated is discharged as a low-temperature exhaust gas out of the furnace through the exhaust tube 11.

On the other hand, the residues from the inflators 1 after the heating processing are periodically taken out of the furnace through the residue discharge port 10.

When a large number of inflators 1 are simultaneously charged into the processing furnace 2, the probability of simultaneous operation of the chemical increases, and as a result, the maximum furnace pressure increases, whereby ejection of the gas generated in the furnace through the sealing portion of the furnace body occurs. Thus, for safety, it is necessary to intermittently charge a few of the inflators 1 into the processing furnace 2.

The timing of intermittent charge of the inflators 1 is determined by the method of judging the timing of charge of the inflators as illustrated in Fig. 2. That is, the number of operations of the chemical is counted with a pressure sensor 16 provided on the processing furnace 2 and with a peak counter 17 for a furnace pressure signal; and only in case where the number of counted peaks of the furnace pressure (i.e., the number of pressure peak points) coincides with the number of charged inflators 1, the next inflators 1 are charged.

As a result, since the chemical is not operated during charge of the inflators, the charging work is safe, and, in addition, an interval of charge of the inflators 1 is a minimum time, thereby maximizing the performance of the processing apparatus.

The apparatus for carrying out the present invention may be, for example, modified. as given below.
(1) The metal partition walls 8a and 8b of the processing furnace 2 are fabricated into a hermetic integral structure, and the furnace wall 4a made of a refractory such as ceramic fibers is formed directly on the outer portion thereof.
(2) For the adjustment of the temperature of the high-temperature combustion gas generated in the incinerator 3, the exhaust gas from the processing furnace 2 or an air preheated by recovering waste heat from the exhaust gas, thereby reducing the fuel consumption rate.
(3) The furnace bottom portion of the processing furnace 2 is fabricated into a refractory grid structure, and the processing gas is supplied from a lower portion of the refractory grid, thereby promoting heat transfer to the inflators 1.
(4) The inflators 1 are heated by an electric heater provided outside the metal partition walls 8a, 8b, and 8c.
(5) A sealing valve similar to the sealing valve 5 of the charger 7 for the inflators 1 is further provided, for example, inside the hopper 20 to form the double sealing valves, and the pusher 6 is provided between the double sealing valves, thereby preventing ejection of the gas in the furnace during charge of the inflators 1.
(6) The furnace bottom portion of the processing furnace 2 can be replaced with an elevatable furnace floor. The processing residues on the furnace floor, which is lowered down, are automatically discharged by the pusher. By pushing up the furnace floor against the main body of the processing furnace 2 by means of a hydraulic unit, etc., the sealing between them is secured.
(7) As measures for the exhaust gas and noise during an operation of the chemical, an exhaust gas processor such as a gas neutralizer or a dust arrester and a silencer (if necessary, an exhauster may be provided together) are provided in the downstream side of the exhaust tube 11.

### Advantages of the Invention:

As described above, the method of judging the timing of charge of inflators in accordance with the present invention gives rise to the following advantages:
(1) Since the timing of the intermittent charge of the inflators is determined by comparing the number of charged inflators with the number of peaks of the furnace pressure during an operation of the chemical, ejection of the processing gas out of the furnace due to the operation of the chemical is prevented during charge of the inflators. Therefore, not only the charging work is safe, but also the inflators can be subjected to heating and processing in a minimum time, thereby maximizing the performance of the processing apparatus.

## Claims

1. A method of judging the timing of charge of inflators (1) into an inflator processing apparatus (2) adapted to process a gas generating chemical-containing inflator (1) for an air bag of an automobile by heating the inflator (1) to a temperature not lower than an operating temperature of the chemical, **characterised in that** the timing of charge of the inflators (1) is judged by comparing the number of charged inflators (1) with the number of peak points of furnace (2) pressure during an operation of the chemical.

2. A method as claimed in claim 1, wherein the number of operations of the chemical is counted with a pressure sensor (16) provided on the processing furnace (2) and with a peak counter (17) for a furnace pressure signal.

## Patentansprüche

1. Verfahren zur Beurteilung der zeitlichen Steuerung zum Laden von Aufblaseinrichtungen (1) in eine Vorrichtung (2) zur Verarbeitung von Aufblaseinrichtungen, die dazu ausgebildet ist, eine Aufblaseinrichtung (1) für einen Airbag eines Fahrzeugs, die eine Gas erzeugende Chemikalie enthält, durch Aufheizen der Aufblaseinrichtung (1) zu verarbeiten, und zwar auf eine Temperatur, die nicht kleiner ist als eine Bearbeitungstemperatur der Chemikalie, **dadurch gekennzeichnet, dass** die zeitliche Steuerung zum Laden der Aufblaseinrichtungen (1) durch Vergleichen der Anzahl der geladenen Aufblaseinrichtungen (1) mit der Anzahl der Spitzenpunkte eines Ofen(2)-Drucks während einer Bearbeitung der Chemikalie beurteilt wird.

2. Verfahren nach Anspruch 1, **dadurch gekennzeichnet, dass** die Anzahl der Bearbeitungen der Chemikalie mit einem Druckaufnehmer (16), der an dem Verarbeitungsofen (2) vorgesehen ist, und mit einem Spitzen-Zähler (17) für ein Ofen-Drucksignal gezählt wird.

## Revendications

1. Procédé d'estimation du cadencement de charge des gonfleurs (1) dans un dispositif de traitement de gonfleur (2) conçu pour traiter un gonfleur contenant un produit chimique générant un gaz (1) destiné à un coussin gonflable de sécurité d'une automobile, en chauffant le gonfleur (1) à une température qui n'est pas inférieure à une température d'exploitation du produit chimique, **caractérisé en ce que** le cadencement de charge des gonfleurs (1) est estimé en comparant le nombre de gonfleurs chargés (1) au nombre de points de crête de la pression dans le four (2) au cours d'une activation du produit chimique.

2. Procédé selon la revendication 1, dans lequel le nombre d'activations du produit chimique est compté à l'aide d'un capteur de pression (16) prévu sur le four de traitement (2) et à l'aide d'un compteur de crêtes (17) pour un signal de pression dans le four.
